# EUROPEAN PATENT SPECIFICATION

(11) **EP 0 380 026 B1**
(45) Date of publication and mention of the grant of the patent: **22.03.1995**
(21) Application number: 90101221.1
(22) Date of filing: 22.01.1990
(51) Int. Cl.: B60H 3/06, B01D 46/10

(54) **Filters**
Filter
Filtres

(30) Priority: 27.01.1989 GB 8901799; 10.07.1989 DE 8908317 U
(43) Date of publication of application: 01.08.1990
(73) Proprietor: GREEN PRODUCTS LIMITED, County Dublin (IE)
(72) Inventor: Nash, James, Milton Keynes MK19 7NR (GB); Hammes, Klaus Peter, London, SW14 7AR (GB); Nash, Harold William, Nr. Berkhampstead Hertfordshire HG4 1ID (GB)
(74) Representative: Frankland, Nigel Howard

(56) References cited:
- FR-A- 2 591 121
- GB-A- 482 622
- GB-A- 2 018 979
- US-A- 4 426 214

## Description

THE PRESENT INVENTION relates to a heating and ventilating system in a motor vehicle and more particularly to filters intended for use in a motor vehicle in order to filter harmful substances from air entering the passenger compartment of the motor vehicle via the heating and ventilating system provided in the vehicle.

There is ever increasing concern about the quality of the air which we breathe. It is a well known fact that motor vehicle exhausts emit substances which pollute the atmosphere and which are harmful if inhaled in excessive quantities. Thus, when travelling in a motor vehicle, particularly when in slow moving or stationary traffic, one is often exposed to air containing a large number of harmful substances.

Previously air entering the passenger compartment of a motor vehicle was either unfiltered or filtered by means of a filter located in the engine compartment of the vehicle in a position where it may not be readily accessible.

In those vehicles where filters are provided, the falter itself tends to be relatively large and may be of a complex design. The filter therefore takes up a relatively large volume and, if it is to be replaceable, requires a considerable amount of space to enable it to be readily inserted into and removed from its normal operating position.

Many vehicle owners do not undertake tasks such as inspecting a filter in the engine compartment of the vehicle, since this is both dirty and time consuming and, as mentioned above, the filter may not be readily accessible. Thus, the filter tends to be poorly maintained and is not replaced as often as it should be which causes the filter to operate in an inefficient manner.

It has been previously proposed to provide a filter material across the air inlet or outlet in a vehicle ventilation system so that air entering the passenger compartment of the vehicle passes through the filter material. However the filter material causes a relatively high resistance to the air flow, which leads to a reduced volume of air entering the passenger compartment. This can result in inadequate ventilation of the interior of the vehicle. Clearly this could be most hazardous.

At the present time filtration systems for motor vehicles are designed specifically for each individual vehicle and are built into the vehicle at the time of manufacture. It would be very difficult, if not impossible, to fit a conventional filter system to an existing motor vehicle at a later point in time. Thus, at present there is little that can be done to improve the quality of air entering the passenger compartment of a motor vehicle which does not incorporate a filtration system.

One previous proposal for a filter arrangement in a ventilation system of a vehicle as defined in the preamble of claim 1 is disclosed in GB-A-2018979. The filter arrangement shown in this document comprises a filter cassette designed to be received within a slot extending into an air flow passage defined by the heating and ventilating system. The filter cassette has a box-like housing within which a block of filter material is received, the box-like housing defining a plurality of apertures in opposed walls such that when the filter cassette is inserted in the slot in the heating and ventilating system air will flow through the housing and through the filter material received therein.

The filter cassette is a bulky and substantially rigid item and a space at least equal to the length of the filter cassette is required in order to insert the cassette into and remove the cassette from the slot in the heating and ventilating system. The filter cassette is designed to be held in place by means of screws and it is therefore necessary to allow sufficient space adjacent the filter cassette to manipulate a screw driver. Inserting and removing the screws in a confined space can be awkward and time consuming. The screws may therefore not always be firmly screwed in which can result in a leakage of air through the entrance to the slot in which the filter cassette is received. The need to remove and subsequently replace screws in order to change the filter deters many people from properly maintaining the filter.

The present invention seeks to provide a filter for use in a motor vehicle which addresses the above-discussed problems.

This invention provides a heating and ventilating system in a motor vehicle, said heating and ventilating system incorporating a filter arrangement, the filter arrangement comprising a filter in the form of a cartridge designed to be removably received in a slot extending around part of an air flow passage defined by the heating and ventilating system, the slot having an entrance by way of which the cartridge is inserted therein, the cartridge having a frame defining an aperture designed to be aligned with the air flow passage, the frame carrying a filter medium which extends across the aperture in the frame, characterised in that the frame and the filter medium are substantially planar and flexible so as to enable the cartridge to bend, and in that the frame carries a collar or flange defining a recess dimensioned to receive and form a seal with part of an element defining the entrance to said slot such that when the filter cartridge is fully inserted into the slot, the action of inserting the cartridge into the slot automatically causes the entrance to the slot to be sealed.

Conveniently the collar or flange is removably located on the filter frame, the flange or collar comprising two parts which are hingedly interconnected and which may be moved between an open position and a closed position in which the frame is trapped between the two parts of the collar.

Advantageously the frame tapers over its length so as to form a tight fit within said slot which is correspondingly tapered.

Preferably the frame is formed as a plastics moulding, the filter material being secured to the frame during the moulding process.

Conveniently the system further comprises a housing adapted to be mounted in the air flow passage defined by the heating and ventilating system, the housing defining an aperture, the slot surrounding the aperture, the slot being adapted to removably receive the filter such that the aperture in the filter and the aperture in the housing are aligned with the air flow passage.

Preferably the housing and the filter frame are provided with releasable cooperating means for retaining the filter within the slot in the housing.

Where the housing and the filter frame are provided with releasable cooperating means for retaining the filter within the slot in the housing, said cooperating means may comprise a projection formed on the filter and a recess formed on the housing, the projection and recess being positioned such that the projection is received within the recess when the filter is fully introduced into the slot in the housing, the filter being removable from the slot by exerting a light pull on the filter.

Advantageously that part of the housing which defines the entrance to said slot is dimensioned to be received within a collar or flange located upon the filter frame, sealing means being provided on the frame or the housing in order to form a seal around the entrance to the slot when the filter is fully inserted in the slot.

The slot defined by the housing may be non-linear. The housing may be designed to receive a plurality of said filters.

In a preferred embodiment, this invention also provides a filter for use in a heating and ventilating system in a motor vehicle comprising a cartridge designed to be removably received in a slot extending around part of an air flow passage, the cartridge having a frame defining an aperture designed to be aligned with the air flow passage, the frame carrying a filter medium which extends across the aperture in the frame, the frame additionally having means formed within the filter medium for supporting the filter medium.

The filter frame and supporting means may be formed as an injection moulding, with plastics material being injected into the filter medium and being allowed to set in order to form the supporting means.

Alternatively the filter frame may be a two part structure with the filter medium being located between the two parts of the frame. Preferably the two parts of the frame are formed as a snap fitting connection.

The filter frame may be formed of plastics material or of cardboard.

Conveniently the aperture formed in the frame has one or more supporting members extending across it the supporting member serving to prevent the filter medium from bowing.

Advantageously the filter medium is impregnated with a chemical adapted to react with a predetermined harmful substance in order to provide a visual indication of the presence of that substance.

Preferably the filter medium comprises a thin membrane of filter material.

Conveniently the filter frame defines a handle to facilitate the insertion and removal of the filter into and from said slot.

In order that the present invention may be more readily understood and so that further features thereof may be appreciated, the invention will now be described by way of example with reference to the accompanying drawings, in which:
FIGURE 1 is a front view of one embodiment of a filter in accordance with the present invention;
FIGURE 2 is a side view of the filter of Figure 1;
FIGURE 3 illustrate two snap-together elements which serve to form the frame for the filter of Figure 1;
FIGURE 4 is a front view of a housing adapted to receive the filter of Figure 1;
FIGURE 5 is an end view of the housing of Figure 5;
FIGURE 6 illustrates two snap-together elements which serve to form the housing of Figure 4;
FIGURE 7 is a perspective, schematic view of an alternative embodiment of filter and housing in accordance with the present invention; and
FIGURE 8 is an end view of the housing of Figure 7 taken in the direction of arrow VIII.

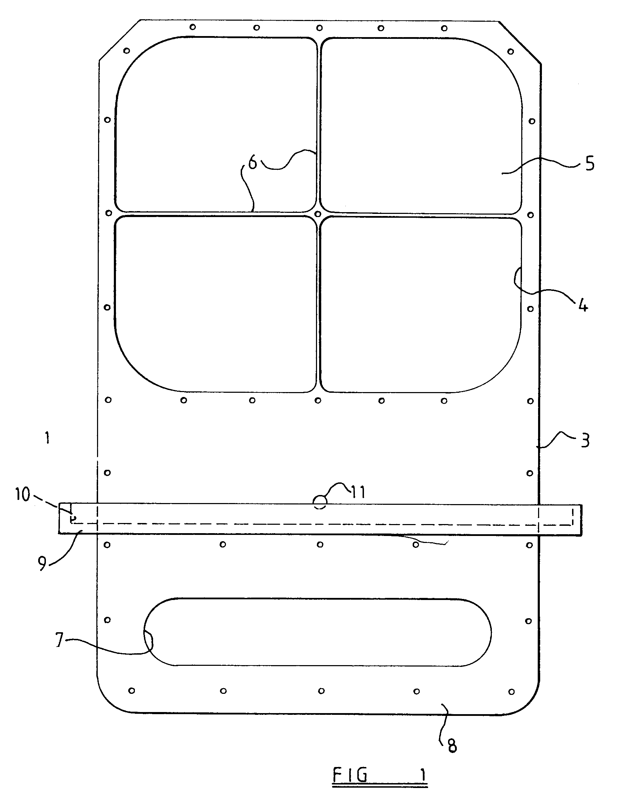

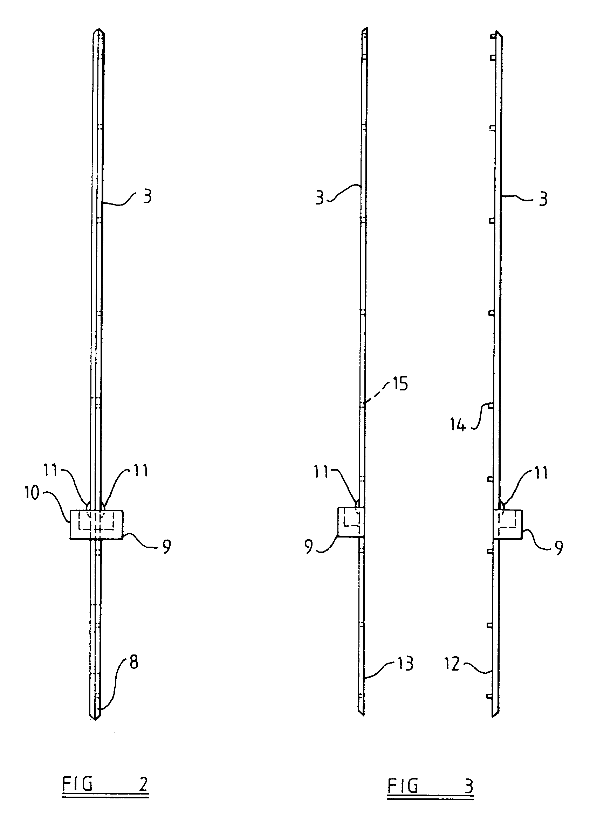

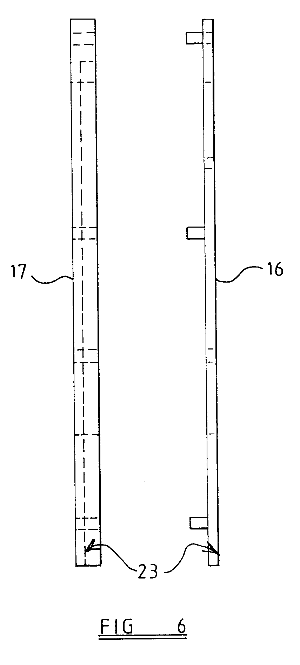

Referring to the accompanying drawings, Figures 1 to 3 illustrate a substantially planer, cartridge type filter 1 which is adapted to be releasably received within a slot defined by a housing 2, illustrated in Figures 4 to 6. The housing is adapted to be mounted in an air flow passage within the heating and ventilating system of a motor vehicle so that air entering the passenger compartment of the vehicle initially has to pass through the filter.

The filter cartridge 1 comprises a thin flexible plastics frame 3 which defines a first, relatively large aperture 4 adjacent one end of the frame. The aperture 4 is rectangular in shape and is of a slightly lesser width than the overall width of the frame 3 such that a thin peripheral frame is formed around three sides of the aperture. A thin membrane of filter material 5 extends across the aperture 4 between the opposed regions of the frame 3 which define the aperture. A paid of cross supports 6 extend centrally across the aperture 4 at right angles to one another and form a support for the filter material 5 and prevent the filter material from bowing when air passes therethrough. The aperture 4 is dimensioned to correspond to the size of the air flow passage in the heating and ventilating system of the motor vehicle in which the filter is to be used.

A second relatively small aperture 7 is formed at the end of the frame opposite the aperture 4. The aperture 7 is dimensioned to enable the end region 8 of the frame 3 to be used as a handle to facilitate the insertion and removal of the cartridge filter into and from the housing 2.

Between the first and second apertures the frame 3 carries a flange or collar 9 which is generally L-shaped in cross-section and defines a recess 10 which is open in a direction towards the aperture 4. The recess 10 extends completely around the frame 3 and is adapted to accommodate, and form a seal with, an end portion of the housing 2 which defines the entrance to the slot which receives the filter cartridge. A resilient sealing member may be provided within the recess 10 or around the portion of the housing 2 which defines the entrance to the slot, as will be described hereinafter, in order to ensure that a substantially airtight seal is formed around the entrance to the slot when the filter cartridge is received within the slot. Thus, the flange will act as a "weather shield" when the filter unit is assembled and will protect the filter medium and prevent drafts from passing through the unit and into the passenger compartment of the vehicle in which the unit is mounted.

A small, upstanding projection 11 is formed at a central position on each side of the substantially flat filter cartridge, at a position adjacent the flange or collar 9. The projection 11 is designed to cooperate with a recess formed adjacent the entrance to the slot in the housing 2 in order to ensure the positive location of the filter cartridge within the slot in the housing and to prevent the filter from inadvertently becoming partially withdrawn from the slot. In the specific embodiment illustrated the projections 11 are each in the form of a small pip.

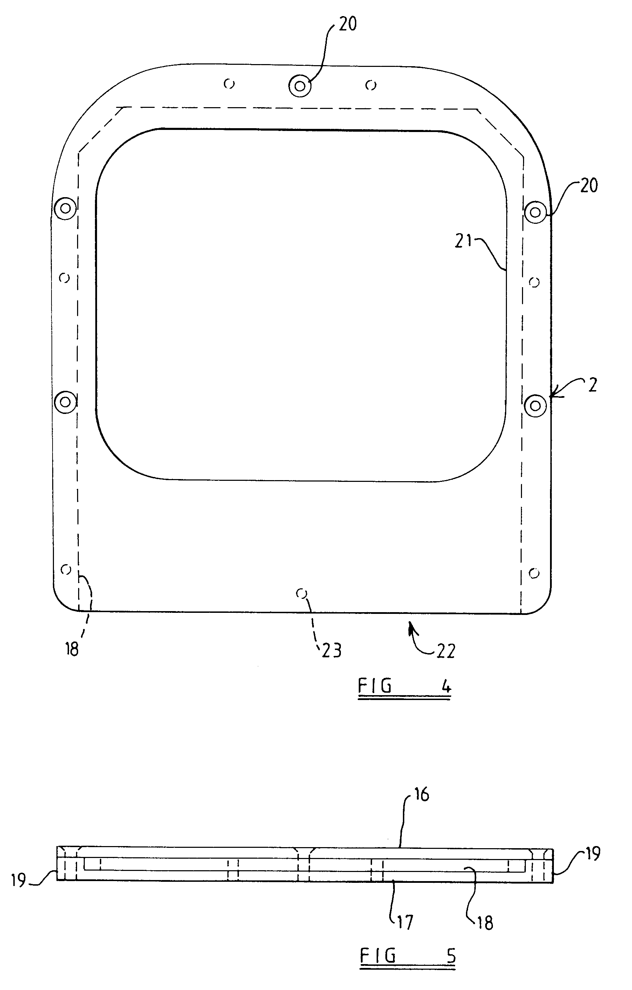

As is most clearly illustrated in Figure 3 of the drawings the frame 3 is formed from two snap-together moulded plastics components 12, 13. Each component 12, 13 defines one face of the planar frame 3 and carries half of the collar or flange 9. Each component also carries a pip 11. The component 12 carries a plurality of small projections or studs 14 around its edge and at intermediate positions across the frame 3, as can be seen in Figure 1. The component 13 defines correspondingly positioned recesses 15 dimensioned to receive the projections 14. The projections 14 and recesses 15 are a snap-fitting connection.

The filter cartridge is assembled with the filter material located between the components 12, 13 so that the material is sandwiched between the peripheral frame surrounding the aperture 4. The projections 14 may pass through the filter material and into the recesses 15 in order to lock the filter material in position between the components 12, 13.

It will be appreciated that if the projections 14 and the recesses 15 are not a snap-fitting connection then the projections may be heat sealed or otherwise secured in position within the recesses 15. Thus, for example, adhesive or welding methods may be used in order to retain the components 12, 13 in the assembled condition.

The filter material 5 may comprise any desired filter medium and may, for example, be formed of polyester. It is envisaged that various filter media will be used in order to provide a range of filter cartridges for various applications. Thus, a summer and a winter filter may be provided where the filter medium has different properties for each application. A specific filter may be provided for use by hayfever sufferers with the filter material being impregnated with a substance which serves to provide relief from the symptoms of hayfever. It would also be possible for the filter material to be impregnated with a chemical which reacts with certain harmful or toxic substances in order to provide a visual indication of the presence of such substances in the air. Thus the filter material may, for example, change colour when there is an excessive presence of a particular substance in the air.

Since the filter cartridge carries only a relatively thin membrane of filter material it offers only minimal resistance to the flow of air through the passageway in which it is located.

Instead of being formed as two snap-together components which, when assembled, are still relatively thick and limit the flexibility of the filter cartridge, the frame may be formed as an injection moulding with plastic material being injected into a mould in which the filter medium 5 is already located such that the plastics material is in effect injected into the filter medium. The plastics material either sets within the filter medium so as to form a 'lattice' type support within the aperture 4 defined by the peripheral frame or drips through the filter medium and leaves the filter medium supported solely by the peripheral frame and any cross-members 6 which may be provided in the frame.

It is envisaged that the most advantageous method of manufacturing the filter cartridge will be to mould the frame 3 in a mould in which the filter material is already present so that the plastics material only engages the filter medium on one side at positions where the peripheral frame and the cross-members 6, if present, are to be formed. This results in the filter material being firmly stuck onto one side of the peripheral frame and cross members. The filter material may be supplied to the mould from a supply roll so that the cartridges can be produced in a continuous process which does not require the manual insertion of the filter material into the mould. Once moulded, the frame, with the filter material, is released from the mould and the filter material is advanced so that a fresh section of filter material is introduced into the mould. The excess filter material is trimmed off the edges of the moulded frame. Forming the frame in this manner enables the frame to be of minimum thickness and maximum flexibility. This is particularly useful where it is necessary to bend the filter cartridge in order to introduce the cartridge into the housing 2.

As a further alternative the frame may be formed from cardboard. In this case the filter medium may be glued to one side of the cardboard frame or may be glued between two cardboard elements which form the frame in a "sandwich" construction similar to that described and illustrated in Figures 1 to 3.

The flange or collar 9 may be formed of a plastics moulding in two parts which are hingedly interconnected such that when the two parts are "open" the frame can be introduced therebetween, with the two parts subsequently being "closed" so that the frame is trapped in place and the flange or collar extends completely around the frame in the same manner as the collar illustrated in Figure 1 of the drawings. One part of the hinged collar may carry pegs which pass through holes in the frame and are received in corresponding apertures formed in the other part of the collar as the collar is closed. It is envisaged that locking tabs will be provided on the two parts of the collar to retain the collar in the closed position.

With the flange or collar 9 as described above the collar may be removed from a spent filter cartridge and "snapped" onto a new cartridge, thereby minimising the amount of wasted material.

Referring now to Figures 4, 5 and 6, the housing itself will be described in more detail. The housing comprises substantially planar upper and lower components 16, 17, which when assembled serve to define a slot 18 dimensioned snugly to receive the cartridge filter 1.

The upper and lower components 16, 17 are of generally rectangular configuration having rounded corners and are each of the same overall dimensions. The lower component 17 defines an upstanding edge 19 around three sides. The upper component 16 is located upon this upstanding edge or rim and is secured thereto by any appropriate means, such as screws, adhesive or the like. If desired the two components 16, 17 could, of course, be formed with appropriate projections and recesses so as to be a snap fitting connection, as illustrated in Figure 6 of the drawings. The means connecting the upper and lower components are illustrated generally in Figure 4 and carry the reference numeral 20.

The upper and lower components 16, 17 each define a generally rectangular aperture 21, the aperture having rounded corners. The aperture 21 is of the same overall dimensions as the aperture 4 defined by the frame of the filter cartridge.

Thus it will be appreciated that the housing defines a slot which is closed on three sides and has an open entrance 22 at one end of the housing. Each component 16, 17 defines a small recess 23 adjacent the entrance to the slot 18 at a position disposed centrally between the sides of the housing. Each recess 23 corresponds in shape and dimensions to the pips 11 formed on the filter cartridge so that the pips 11 are received snugly in the recesses when the filter cartridge is fully introduced into the slot 18. As indicated above, this serves to retain the filter cartridge within the slot and to enable a person inserting the cartridge into the slot to 'feel' when the cartridge is fully inserted as the pips 11 'snap into position' within the recesses 23.

As indicated above, the end of the housing which defines the entrance 22 is dimensioned to be received within the recess 10 defined by the collar 9 on the frame 3. The end of the housing may be provided with a resilient sealing member in order to provide an air tight seal around the entrance to the slot. This may be in addition to or as an alternative to a sealing member being provided within the recess 10. Thus, as mentioned above, the flange or collar 9 serves to form a "weather shield" preventing drafts, moisture etc. from passing out of the open end of the housing and into the vehicle in which the filter unit is mounted.

In order to further ensure that the filter cartridge is a tight fit in the slot 18 in the housing, the frame 3 is formed in a wedge shape and the slot 18 is tapered. Thus, the slot 18 may taper from a height of approximately 2.5 mm at its entrance 22 to a height of approximately 2 mm at its base. The frame 3 of the filter cartridge tapers correspondingly over its length from a thickness of approximately 2.5 mm adjacent the collar 9 to a thickness of approximately 2 mm at its free end. This tapered arrangement provides a tight fit which assists in the positive location of the filter cartridge in the slot in the housing and prevents air from passing around the edges of the filter cartridge rather than through the filter material.

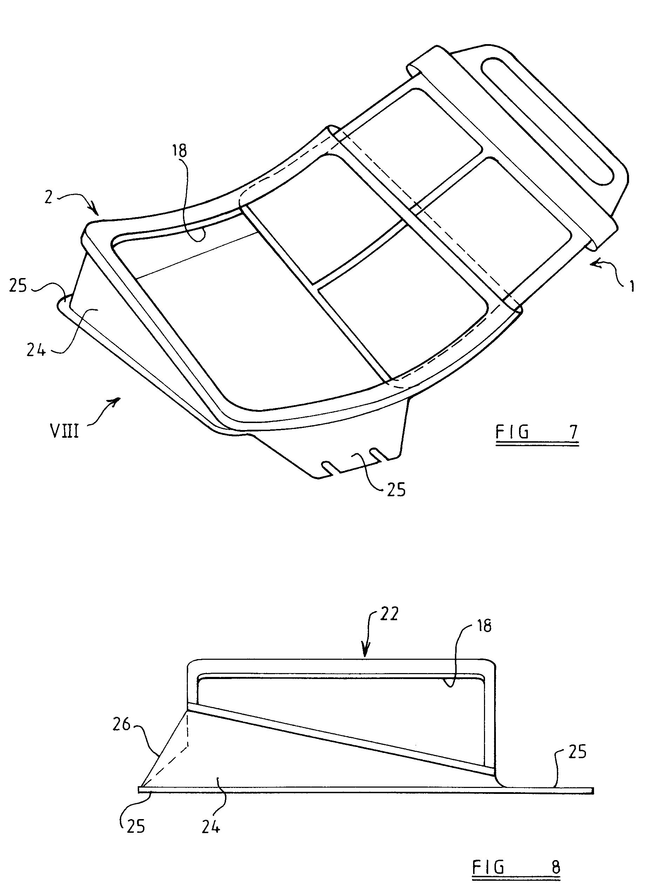

The filter unit comprising the filter cartridge and the housing is adapted to be mounted in an air flow passage within the heating and ventilating system of a motor vehicle. In many cases space is very limited and there may not be sufficient room to fix a rigid, flat housing such as is illustrated in Figures 4 to 6 within the heating and ventilating system. Thus, it may prove necessary to modify the housing so that it can be accommodated in the space available. Figures 7 and 8 illustrate a filter unit incorporating a filter of generally the same form as the filter illustrated in Figures 1 to 3 and a housing which has been designed to be received in a space at one end of an air flow passage in a heating and ventilating system of an existing motor vehicle. For ease of description the same reference numerals are used for parts which are common to the embodiments of both Figures 4 and 7.

It will be appreciated from Figure 7 that the housing 2 defines an arcuate or non-linear slot 18. The housing additionally defines side walls 24 on two sides, the side walls being provided to facilitate the mounting of the housing on existing components within the motor vehicle in which a filter unit is to be provided. The housing also carries appropriate peripheral flanges 25 by way of which the housing may be mounted in position. If necessary the or each peripheral flange may carry a stiffening web 26 connected to the flange and the side wall 24.

It will be appreciated that the flexibility of the filter cartridge 1 enables it to be received in a non-linear slot of virtually any configuration. In addition it will be appreciated that the construction of the filter and housing as shown in Figure 7 means that less space is required in order to introduce the filter into the slot in the housing. With a rigid filter and housing a space equal to the length of the filter is required adjacent the housing in order to allow for the insertion and removal of the filter cartridge. However with the design of Figure 7 a space which is less than the overall length of the filter cartridge will be sufficient to enable the cartridge to be introduced into the slot in the housing.

The slot 18 formed in the housing 2 could be of an undulating form which would enable a greater volume of filter material to be provided per unit cross sectional area of the housing.

The housing 2 could be formed so as to accommodate more than one filter element. Thus, two or more elements may be arranged in juxtaposition within a single housing, in a co-planar manner, so as to provide a very large filter surface. This enables a large filter surface to be provided, whilst utilising filter elements which are of a size which is convenient to handle.

The unit illustrated in Figures 7 and 8 is intended to be located within the engine compartment of a motor vehicle immediately adjacent the lower edge of the windscreen at a position beneath an air inlet formed in the bonnet or cover extending across the engine compartment.

Upon opening the bonnet of the vehicle the handle 8 of the filter would be readily accessible thereby rendering the task of inspecting and changing the filter very simple.

The filter unit could be located within the passenger compartment of the motor vehicle so that the filter extends across an air outlet leading into the passenger compartment. In this case the seal formed between the collar 9 and the entrance to the slot formed in the housing will prevent drafts from entering the passenger compartment of the vehicle. Where the filter unit is located in the engine compartment of a vehicle then this seal will afford protection for the filter medium from the elements such as rain, snow, ice, etc.

Wherever the filter unit is located in the motor vehicle it will be appreciated that the task of inspecting and changing the filter is very simple since the filter can be readily removed from the housing by way of the handle 8. The filter can then be cleaned or replaced. The ease with which the filter may be inspected and changed will encourage vehicle owners to maintain the filter properly so that it will always be working in an efficient manner. The vehicle owner will be able to change the filter whenever it is considered necessary. Thus if the vehicle has been driven through dirty or dusty conditions then the filter may be changed more often than might otherwise be expected. As indicated above specific types of filter may be provided for different applications thus, summer and winter filters and a special 'hay fever filter' may be provided.

Once removed from the filter unit, the filter cartridge may be forwarded to a laboratory for analysis of the substances trapped by the filter.

It will be appreciated that the self contained filter unit comprising the filter cartridge 1 and the housing 2 may be mounted in an existing motor vehicle heating and ventilating systems with a minimum amount of modification to the system. If necessary a housing may be formed for a particular type of vehicle although the flexible filter cartridge will be suitable for use with all types of housing since it is capable of being received in a slot of almost any shape, as long as the overall dimensions of the slot correspond to those of the cartridge.

It will be appreciated that various modifications may be made to the above-described embodiments of filter unit without departing from the scope of the present invention.

## Claims

1. A heating and ventilating system in a motor vehicle, said heating and ventilating system incorporating a filter arrangement, the filter arrangement comprising a filter in the form of a cartridge (1) designed to be removably received in a slot (18) extending around part of an air flow passage defined by the heating and ventilating system, the slot (18) having an entrance by way of which the cartridge (1) is inserted therein, the cartridge (1) having a frame (3) defining an aperture (4) designed to be aligned with the air flow passage, the frame (3) carrying a filter medium (5) which extends across the aperture (4) in the frame (3), characterised in that the frame (3) and the filter medium (5) are substantially planar and flexible so as to enable the cartridge (1) to bend, and in that the frame (3) carries a collar or flange (9) defining a recess (10) dimensioned to receive and form a seal with part of an element (2) defining the entrance to said slot (18) such that when the filter cartridge (1) is fully inserted into the slot (18), the action of inserting the cartridge (1) into the slot (18) causes the entrance to the slot to be sealed.

2. A heating and ventilating system according to Claim 1 characterised in that the collar or flange (9) is removably located on the filter frame (3), the flange or collar (9) comprising two parts which are hingedly interconnected and which may be moved between an open position and a closed position in which the frame (3) is trapped between the two parts of the collar (9).

3. A heating and ventilating system according to Claim 1 or Claim 2 characterised in that the frame (3) tapers over its length so as to form a tight fit within said slot (18) which is correspondingly tapered.

4. A heating and ventilating system according to any one of Claims 1 to 3 characterized in that the frame (3) is formed as a plastics moulding, the filter material (5) being secured to the frame (3) during the moulding process.

5. A heating and ventilating system according to any one of Claims 1 to 4 wherein the system further comprises a housing (2) adapted to be mounted in the air flow passage defined by the heating and ventilating system, the housing (2) defining an aperture (21), the slot (18) surrounding the aperture, the slot (18) being adapted to removably receive the filter (1) such that the aperture (4) in the filter (1) and the aperture (21) in the housing (2) are aligned with the air flow passage.

6. A heating and ventilating system according to Claim 5 characterised in that the housing (2) and the filter frame (3) are provided with releasable cooperating means (11, 12) for retaining the filter (1) within the slot (18) in the housing (2).

## Patentansprüche

1. Heiz- und Lüftungssystem in einem Kraftfahrzeug, wobei das Heiz- und Lüftungssystem eine Filteranordnung enthält, die einen Filter in der Gestalt einer Patrone (1) umfaßt, die gestaltet ist, um lösbar in einem Schlitz (18) aufgenommen zu werden, der sich um einen Teil eines Luftstromdurchgangs erstreckt, der von dem Heiz- und Lüftungssystem gebildet wird, wobei der Schlitz (18) einen Einlaß aufweist, mittels dessen die Patrone (1) darin eingesetzt wird, wobei die Patrone (1) einen Rahmen (3) aufweist, der eine Öffnung (4) bildet, die gestaltet ist, um zu dem Luftstromdurchgang ausgerichtet zu werden, wobei der Rahmen (3) ein Filtermedium (5) trägt, das sich quer über die Öffnung (4) in dem Rahmen (3) erstreckt, dadurch gekennzeichnet, daß der Rahmen (3) und das Filtermedium (5) im wesentlichen eben und flexibel sind, so daß die Patrone (1) sich biegen kann, und der Rahmen (3) einen Kragen oder Flansch (9) trägt, der eine Ausnehmung (10) bildet, die dimensioniert ist, um einen Teil eines Elements (2), das den Einlaß des Schlitzes (18) bildet, aufzunehmen und mit diesem einen Verschluß zu bilden, so daß, wenn die Filterpatrone (1) vollständig in den Schlitz (18) eingesetzt ist, der Vorgang des Einsetzens der Patrone (1) in den Schlitz (18) bewirkt, daß der Schlitz verschlossen wird.

2. Heiz- und Lüftungssystem nach Anspruch 1, dadurch gekennzeichnet, daß der Kragen oder Flansch (9) lösbar an dem Filterrahmen (3) angeordnet ist, wobei der Flansch oder Kragen (9) zwei Teile umfaßt, die schwenkbar miteinander verbunden sind und die zwischen einer geöffneten und einer geschlossenen Position bewegt werden können, in der der Rahmen (3) zwischen den zwei Teilen des Kragens (9) eingeklemmt ist.

3. Heiz- und Lüftungssystem nach Anspruch 1 oder 2, dadurch gekennzeichnet, daß der Rahmen (3) sich über seine Länge verjüngt, um eine feste Passung innerhalb des Schlitzes (18), der entsprechend verjüngt ist, zu bilden.

4. Heiz- und Lüftungssystem nach einem der Ansprüche 1 bis 3, dadurch gekennzeichnet, daß der Rahmen (3) als eine Kunststofform gebildet ist, wobei das Filtermaterial (5) an dem Rahmen (3) während des Formverfahrens gesichert wird.

5. Heiz- und Lüftungssystem nach einem der Ansprüche 1 bis 4, dadurch gekennzeichnet, daß das System außerdem ein Gehäuse (2) umfaßt, das gestaltet ist, um in dem Luftstromdurchgang, der von dem Heiz- und Lüftungssystem gebildet wird, montiert zu werden, wobei das Gehäuse (2) eine Öffnung (21) bildet, der Schlitz (18) die Öffnung umgibt und gestaltet ist, um den Filter (1) lösbar aufzunehmen, so daß die Öffnung (4) in dem Filter (1) und die Öffnung (21) in dem Gehäuse (2) zu dem Luftstromdurchgang ausgerichtet sind.

6. Heiz- und Lüftungssystem nach Anspruch 5, dadurch gekennzeichnet, daß das Gehäuse (2) und der Filterrahmen (3) mit lösbaren, zusammenwirkenden Mitteln (11, 12) zum Halten des Filters (1) innerhalb des Schlitzes (18) in dem Gehäuse (2) versehen sind.

## Revendications

1. Circuit de chauffage et de ventilation dans un véhicule à moteur, le circuit de chauffage et de ventilation comprenant un ensemble à filtre, cet ensemble comprenant un filtre sous forme d'une cartouche (1) destiné à être logé de façon amovible dans une fente (18) disposée autour d'une partie d'un passage de circulation d'air délimitée par le circuit de chauffage et de ventilation, la fente (18) ayant une entrée par laquelle la cartouche (1) est introduite à l'intérieur, la cartouche (1) ayant un châssis (3) délimitant une ouverture (4) destinée à être alignée sur le passage de circulation d'air, le châssis (3) portant un milieu de filtration (5) disposé transversalement à l'ouverture (4) formée dans le châssis (3), caractérisé en ce que le châssis (3) et le milieu de filtration (5) sont pratiquement plans et flexibles afin qu'ils permettent la flexion de la cartouche (1), et en ce que le châssis (3) porte un collier ou une bride (9) délimitant une cavité (10) ayant des dimensions permettant le logement et la formation d'un joint d'étanchéité avec une partie d'un élément (2) délimitant l'entrée dans la fente (18) si bien que, lorsque la cartouche (1) de filtre est totalement introduite dans la fente (18), l'action d'introduction de la cartouche (1) dans la fente (18) provoque la fermeture étanche de l'entrée dans la fente.

2. Circuit de chauffage et de ventilation selon la revendication 1, caractérisé en ce que le collier ou la bride (9) est placé de façon amovible sur le châssis (3) du filtre, la bride ou le collier (9) comprenant deux parties qui sont raccordées de manière articulée et qui peuvent être déplacées entre une position d'ouverture et une position de fermeture dans laquelle le châssis (3) est piégé entre les deux parties du collier (9).

3. Circuit de chauffage et de ventilation selon la revendication 1 ou 2, caractérisé en ce que le châssis (3) a une dimension qui varie sur sa longueur afin qu'il soit ajusté intimement dans la fente (18) qui a une variation de dimension correspondante.

4. Circuit de chauffage et de ventilation selon l'une quelconque des revendications 1 à 3, caractérisé en ce que le châssis (3) est formé de matière plastique moulée, la matière (5) du filtre étant fixée au châssis (3) pendant l'opération de moulage.

5. Circuit de chauffage et de ventilation selon l'une quelconque des revendications 1 à 4, dans lequel le circuit comporte en outre un boîtier (2) destiné à être monté dans le passage de circulation d'air délimité par le circuit de chauffage et de ventilation, le boîtier (2) délimitant un orifice (21), la fente (18) entourant l'orifice, la fente (18) étant destinée à loger le filtre (1) de manière amovible afin que l'orifice (4) du filtre (1) et l'orifice (21) du boîtier (2) soient alignés sur le passage de circulation d'air.

6. Circuit de chauffage et de ventilation selon la revendication 5, caractérisé en ce que le boîtier (2) et le châssis (3) du filtre ont des dispositifs de coopération temporaire (11, 12) destinés à retenir le filtre (1) dans la fente (18) placée dans le boîtier (2).
